# EUROPÄISCHE PATENTANMELDUNG

(11) **EP 2 511 133 A1**
(43) Veröffentlichungstag der Anmeldung: **17.10.2012**
(21) Anmeldenummer: 11168456.9
(22) Anmeldetag: 01.06.2011
(51) Int. Cl.: B60P 3/36

(54) **Fahrzeug**

(30) Priorität: 16.04.2011 DE 202011005362 U
(71) Anmelder: Schuler, Karl-Heinz, 88213 Ravensburg/Schmalegg (DE)
(72) Erfinder: Schuler, Karl-Heinz, 88213 Ravensburg/Schmalegg (DE)
(74) Vertreter: Daub, Thomas

(57) **Zusammenfassung**

Bei einem Fahrzeug (1), bestehend aus einem Tragrahmen (2) und aus einer Vielzahl von an dem Tragrahmen (2) im Inneren des Fahrzeugs (1) angeordneten Einrichtungsgegenstände (6) in Form von Betten (7), Kühlschränken (8) oder dgl., sollen die notwendigen Einrichtungsgegenstände (6) derart zueinander positioniert sein, dass das vorhandene Raumangebot optimal ausgenutzt ist, ohne dass Zugänglichkeit und Bedienkomfortabilität der Einrichtungsgegenstände (6) beeinträchtigt sind.

Dies wird dadurch erreicht, dass jeweils einer der als Einrichtungsgegenstände (6) vorhandenen Kühlschränke (8) zwischen dem Tragrahmen (2) des Fahrzeuges (1) und eines weiteren Einrichtungsgegenstandes (6) in Form eines Bettes (7) angeordnet ist und dass der Kühlschrank (8) eine verschwenkbare Türe (9) aufweist, die ein Richtung eines Freiraumes (12) zum Öffnen und Schließen der Kühlschranktür (9) ausgerichtet ist.

## Beschreibung

Die Erfindung bezieht sich auf ein Fahrzeug nach dem Oberbegriff des Patentanspruches 1.

Solche Fahrzeuge werden seit Jahrzehnten als Wohnmobile oder Wohnwagen genutzt. Die üblichen Einrichtungsgegenstände, beispielsweise- Küchen- und Badezimmermöbel sowie Schlafgelegenheiten in Form von Betten, Liegen oder Rosten sind üblicherweise in solchen Fahrzeugen platzsparend eingebaut, um das begrenzte Flächenangebot des Fahrzeuges möglichst optimal auszunutzen. Dabei ist zwischen den einzelnen Einrichtungsgegenständen ein bestimmter Freiraum vorzusehen, um die Bewegungsmöglichkeiten der in dem Fahrzeug wohnenden Menschen zu erlauben. Auch sollte die Bedienbarkeit der Einrichtungsgegenstände möglichst komfortabel gewährleistet sein.

Seit Jahrzehnten besteht daher ein erheblicher Bedarf, die zur Verfügung stehenden Volumenangebote in den Fahrzeugen möglichst derart auszunutzen, dass die Bedienbarkeit der Einrichtungsgegenstände gegeben und gleichzeitig der Komfortstandart optimiert ist.

Als nachteilig bei solchen platzsparenden Positionierungen der einzelnen Einrichtungsgegenstände im Inneren des Fahrzeuges hat sich jedoch herausgestellt, dass entweder die Zugänglichkeit oder Bedienbarkeit der einzelnen Einrichtungsgegenstände, beispielsweise eines Kühlschrankes, beeinträchtigt ist, oder dass der zur Verfügung stehender Raum nicht optimal ausgenutzt ist.

Es ist daher Aufgabe der Erfindung, ein Fahrzeug der eingangs genannten Gattung bereit zu stellen, in dem die notwendigen Einrichtungsgegenstände, insbesondere die Betten und der Kühlschrank, derart zueinander positioniert sind, dass das vorhandene Raumangebot optimal ausgenutzt ist, ohne dass die Zugänglichkeit und die Bedienkomfortabilität des Kühlschrankes bzw. die Nutzung des Bettes beeinträchtigt sind.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass der Kühlschrank zwischen dem Traggestell, also dem Boden des Fahrzeuges, und der Unterseite des Bettes angeordnet ist, ist der Freiraum zwischen dem Bett und dem Boden des Fahrzeuges optimal ausgenutzt. Gleichzeitig kann der Volumeninhalt des Kühlschrankes an die Breite des Bettes angepasst werden, so dass der unter dem Bett angeordnete Kühlschrank ein um ca. 10 bis 20 %iges größeres Volumen aufweist als ein handelsüblicher Kühlschrank, der im Bereich der Kücheneinrichtungsgegenstände untergebracht ist. Der Kühlschrank im Bereich eines Durchganges bzw. innerhalb von Küchen-Einrichtungsgegenständen ist nämlich in der Tiefe begrenzt, denn wenn dieser eine größere Tiefe aufweist, geht dadurch Platz im Bereich des Durchganges oder für andere Einrichtungsgegenstände verloren.

Gleichzeitig ist bei der Unterbringung des Kühlschrankes unterhalb des Bettes sichergestellt, dass der Kühlschrank ohne weiteres vom Innenraum des Fahrzeuges zugänglich ist und auf einfache Art und Weise erreicht werden kann, so dass die in dem Kühlschrank vorhandenen bzw. einzulagernden Lebensmittel aus diesem zu entnehmen bzw. einzuladen sind.

Es ist besonders vorteilhaft, wenn ein handelsüblicher Kühlschrank der als Einrichtungsgegenstand in einem bekannten Fahrzeug bzw. Wohnmobil verwendet wird, mittels eines Erweiterungs-Rahmens, der der Querschnittskontur des Kühlschrankes nachgebildet ist, erweitert wird, denn dadurch ist zum Einen gewährleistest, dass die Herstellungskosten für die Erweiterung des Kühlschrankes gering gehalten sind und zum Anderen, dass die zusätzlich vorhandene Breite, die durch das Bett zur Verfügung steht, durch den derart erweiterten Kühlschrank optimal ausgenutzt ist, so dass dessen Volumen gegenüber einem handelsüblichen Kühlschrank um ca. 20% vergrößert ist.

In der Zeichnung ist ein Ausführungsbeispiel für die Positionierung eines Kühlschrankes in einem Fahrzeug mit zwei Ausführungsvarianten des Kühlschrankes dargestellt, die nachfolgend näher erläutert sind. Im Einzelnen zeigt:
- Figur 1: ein Fahrzeug, bestehend aus einem Fahrgestell und zwei parallel zueinander verlaufenden Betten und einem unter einem der Betten angeordneten Kühlschrank, in Draufsicht,
- Figur 2: das Fahrzeug gemäß Figur 1, entlang des Schnittes II-II und
- Figur 3: einen handelsüblichen Kühlschrank in der Einbauposition von Figur 1, mit einem Erweiterungs-Rahmen, in perspektivischer Ansicht.

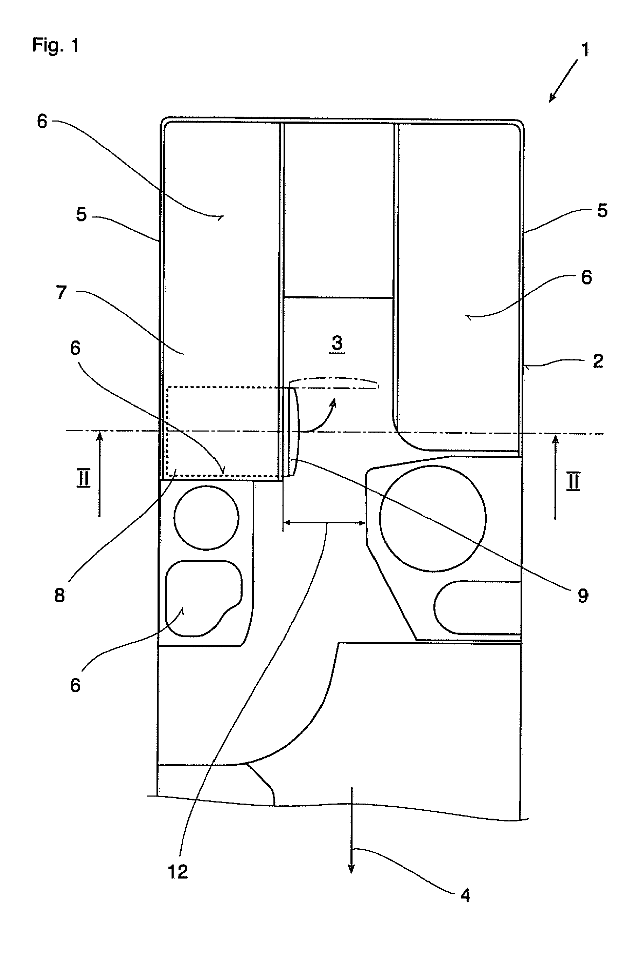

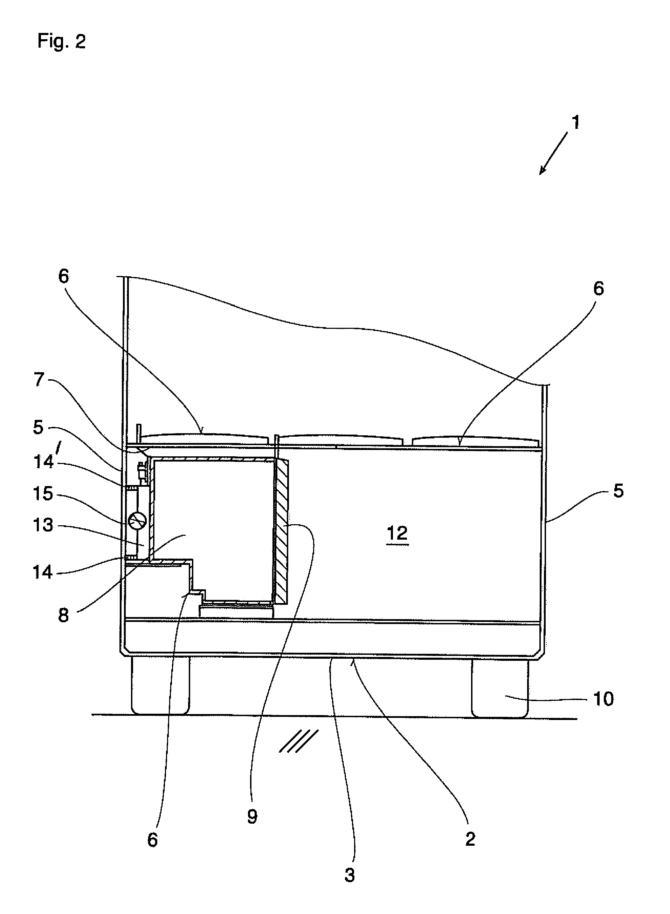

In den Figuren 1 und 2 ist ein Fahrzeug 1 schematisch abgebildet, das beispielsweise als Wohnmobil oder als Wohnwagen dient. Das Fahrzeug 1 weist einen Tragrahmen 2 auf, an dem ein Boden 3 und Seitenwände 5 sowie Räder 10 angebracht sind.
Insbesondere durch den Boden 3 und die Seitenwände 5 wird ein Innenraum für das Fahrzeug 1 geschaffen, der bewohnbar ist.

In diesem Innenraum sind verschiedene Einrichtungsgegenstände 6 angeordnet, und zwar zwei Betten 7 und ein Kühlschrank 8. Weitere Einrichtungsgegenstände 6, beispielsweise Küchenmöbel, Badezimmereinrichtungen und dergleichen, sind im Inneren des Fahrzeuges 1 ebenfalls vorgesehen. Diese Einrichtungsgegenstände 6 sind derart im Inneren des Fahrzeuges 1 anzuordnen, dass der begrenzt zur Verfügung stehende Raum möglichst optimal ausgenutzt ist, so dass keine unnötigen Freiräume entstehen.

Zu diesem Zweck ist der Kühlschrank 8 zwischen der Unterseite eines der Betten 7 und dem Boden 3 bzw. dem Tragrahmen 2 angeordnet. Die Breite des Bettes 7 beträgt etwa 70 bis 80 cm, so dass dieses Raumangebot zur Anordnung des Kühlschrankes 8 zur Verfügung steht. Wenn der Kühlschrank 8 unterhalb des Bettes platziert ist, kann der im Bereich der Küchen-Einrichtungsgegenstände 6 frei gewordene Raum anderweitig, beispielsweise mittels Schubladen, genutzt werden.

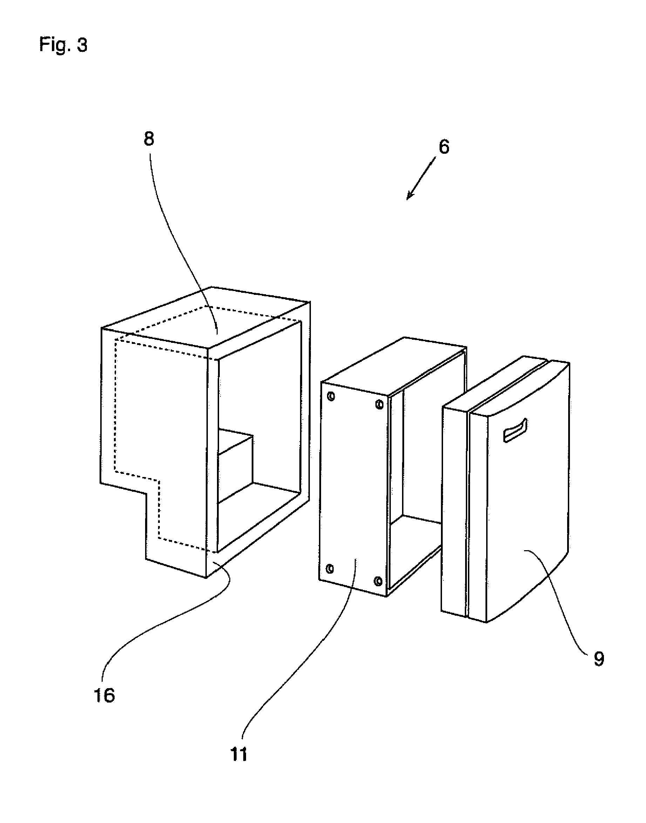

In Figur 3 ist die Tiefe des Kühlschrankes 8 an die vorhandene Breite des Bettes 7 angepasst, wodurch der bislang handelsüblich verwendete Kühlschrank 8 im Bereich der Küchenmöbel nach Figur 1 und 2 eine gegenüber diesem vergrößertes Volumen von ca. 20% aufweist.

Gleichzeitig ist eine an dem Kühlschrank verschwenkbar angebrachte Kühlschranktür 9 derart ausgerichtet, dass diese in einen Freiraum 12, der zwischen den beiden parallel zu der bevorzugten Fahrtrichtung 4 ausgerichteten Betten 7 eingeschwenkt werden kann, um die in dem Kühlschrank 8 gelagerten Lebensmittel zu entnehmen bzw. neue Lebensmittel in den Kühlschrank 8 einzubringen.

Die Kühlschrankkühlung 13 befindet sich auf der dem Freiraum 12 abgewandten Rückseite des Kühlschrankes 8. Um die durch eine Einlassöffnung 14 eingesaugte Luft, die sich erwärmt, aus dem Innenraum des Fahrzeuges 1 abzuführen, ist ein Auslassöffnung 14' vorgesehen. Durch die Kühlung des Kühlschrankes 8 entsteht ein Abgas, das mit der erwärmten Luft aus der Auslassöffnung 14 nach außen geleitet ist. Mittels eines Ventilators 15 ist die Umwälzung der Luft erhöht.

In Figur 3 ist ein Kühlschrank 8 abgebildet, der eine Tiefe aufweist, die in den bekannten Fahrzeugen 1 im Bereich der Küche eingebaut ist. Diese Tiefe des Kühlschrankes 8 wird mittels eines an die Querschnittsform des Kühlschrankes 8 angepassten Erweiterungs-Rahmens 11 vergrößert, so dass die Tiefe des derart erweiterten Kühlschrankes 8 an die Breite des Bettes 7 angepasst ist. Der Erweiterungs-Rahmen 11 ist dabei luftdicht und fest mit der Stirnseite des Kühlschrankes 8 verbunden. Die Kühlschranktür 9 wird mittels zweier Scharniere oder Beschläge verschwenkbar an dem Erweiterungs-Rahmen 11 angebracht und schließt mit ihren Dichtungen im geschlossenen Zustand luftdicht an dem Erweiterungs-Rahmen 11 ab.

Da der Erweiterungs-Rahmen 11 individuell herstellbar ist, kann vor dem Einbau des handelsüblichen Kühlschrankes 8 exakt ausgemessen werden, welche Breite das jeweilige Bett 7 aufweist, um anschließend die Breite des Erweiterungs-Rahmens 11 derart zu gestalten, dass die Tiefe des erweiterten Kühlschrankes 8 exakt an den zur Verfügung stehenden Raum unterhalb des Bettes 7 angepasst ist.

Um die Energieeinsparung für den Betrieb des Kühlschrankes 8 zu erhöhen, ist dieser mittels eines kistenförmigen Isolators 16 ummantelt, der beispielsweise aus Schaumstoff oder dgl. gefertigt ist. Die Anordnung des Isolators 16 ist dadurch ermöglicht, dass zwischen der Unterseite des Bettes 7 und des Bodens 2 genügend Abstand vorliegt und auch seitlich neben den Wänden des Kühlschrankes 8 keine platzbegrenzenden Gegenstände vorhanden sind.

## Patentansprüche

1. Fahrzeug (1), bestehend aus einem Tragrahmen (2) und aus einer Vielzahl von an dem Tragrahmen (2) im Inneren des Fahrzeugs (1) angeordneten Einrichtungsgegenstände (6) in Form von Betten (7), Kühlschränken (8) oder dgl.,
**dadurch gekennzeichnet,**
**dass** jeweils einer der Kühlschränke (8) zwischen dem Tragrahmen (2) des Fahrzeugs (1) und einem der Betten (7) angeordnet ist und dass der Kühlschrank (8) eine verschwenkbare Türe (9) aufweist, die in Richtung eines Freiraumes (12) zum Öffnen und Schließen der Kühlschranktür (9) ausgerichtet ist.

2. Fahrzeug nach Anspruch 1,
**dadurch gekennzeichnet,**
**dass** die Tiefe des Kühlschrankes (8) an die Breite des Bettes (7) angepasst ist und dass das Volumen des Kühlschrankes (8) in Richtung der Breite des Bettes (7) vollständig ausfüllt.

3. Fahrzeug nach Anspruch 1 oder 2,
**dadurch gekennzeichnet,**
**dass** die Kühlung (13) des Kühlschrankes (8) mittels Gas erfolgt, dass das Abgas der Kühlung aus einer Auslassöffnung (14') zusammen mit der erwärmten Abluft austritt und dass durch eine Einlassöffnung (14) frische Luft von außen zugeführt ist.

4. Fahrzeug nach Anspruch 3,
**dadurch gekennzeichnet,**
**dass** die Einlass- und Auslassöffnungen (14, 14') in der Seitenwand (5) vorgesehen sind.

5. Fahrzeug nach Anspruch 3 oder 4,
**dadurch gekennzeichnet,**
**dass** die Luft- und Abgasumwälzung für den Betrieb des Kühlschrankes (8) mittels eines Ventilators (15) erfolgt.

6. Fahrzeug nach einem der vorgenannten Ansprüche,
**dadurch gekennzeichnet,**
**dass** das Bett (7) und der Kühlschrank (8) in einem Heckbereich des Fahrzeuges (1) oder in der Mitte des Fahrzeuges (1) angeordnet sind.

7. Fahrzeug nach Anspruch 6,
**dadurch gekennzeichnet,**
**dass** das Bett (7) und der Kühlschrank (8) bezogen auf die bevorzugte Fahrtrichtung (4) des Fahrzeuges (1) parallel zu dieser angeordnet sind.

8. Fahrzeug nach einem der vorgenannten Ansprüche,
**dadurch gekennzeichnet,**
**dass** zur Vergrößerung des Volumen des Kühlschrankes (8) ein an die Querschnittskontur des Kühlschrankes (8) angepasster Erweiterungs-Rahmen (11) fest an diesem angebracht ist, durch den ein handelsüblicher Kühlschrank (8) auf die zur Verfügung stehenden Raumangebote bzw. an die Breiten eines der Betten (7) variabel anpassbar ist.

9. Fahrzeug nach Anspruch 8,
**dadurch gekennzeichnet,**
**dass** der Erweiterungs-Rahmen (11) luftdicht an dem Kühlschrank (8) angebracht ist und dass der Erweiterungs-Rahmen (11) zwischen der Kühlschranktür (9) und dem Kühlschrank (8) oder zwischen dem Kühlschrank (8) und der Kühlschrankentlüftung (13) vorgesehen ist.

10. Fahrzeug nach einem der vorgenannten Ansprüche,
**dadurch gekennzeichnet,**
**dass** der Kühlschrank (8) mittels eines Isolators (16) ganz oder teilweise ummantelt ist.
